# EUROPÄISCHE PATENTANMELDUNG

(11) **EP 1 042 995 A2**
(43) Veröffentlichungstag der Anmeldung: **11.10.2000**
(21) Anmeldenummer: 00106661.2
(22) Anmeldetag: 29.03.2000
(51) Int. Cl.: A61C 13/265

(54) **Zahntechnisches Geschiebe**

(30) Priorität: 09.04.1999 DE 19915917
(71) Anmelder: ZL Microdent-Attachment GmbH & Co. KG, D-58339 Breckerfeld (DE)
(72) Erfinder: Clostermann, Volkhard-Hagen, 58097 Hagen (DE); Möllerfeld, Willibert, 58339 Breckerfeld (DE); Dragotto, Nicolo, 44536 Lünen (DE); Böschemeyer, Thomas, 58313 Herdecke (DE)
(74) Vertreter: Dörner, Lothar, Dipl.-Ing.

(57) **Zusammenfassung**

Die Erfindung betrifft ein zahntechnisches Geschiebe mit einer an einem Restzahn oder einem Implantat befestigten Patrize (1). Die Patrize (1) weist ein Gleitstück (14) auf. An der Patrize (1) ist eine Matrize (2) befestigbar, die an einem herausnehmbaren Zahnersatz angeordnet ist. Zwischen Patrize (1) und Matrize (2) ist ein Einsatz (3) angeordnet. Mit dem zahntechnischen Geschiebe ist ohne Austausch der Patrize (1) und/oder der Matrize (2) wahlweise ein verschraubbares oder ein verriegelbares oder ein frikative einstellbares Geschiebe herstellbar.

## Beschreibung

Die Erfindung betrifft ein zahntechnisches Geschiebe mit einer an einem Restzahn oder einem Implantat befestigten Patrize, die ein Gleitstück aufweist, und mit einer an einem herausnehmbaren Zahnersatz angeordneten Matrize, die an der Patrize befestigbar ist, wobei zwischen Patrize und Matrize ein Einsatz angeordnet ist.

Zahntechnische Geschiebe finden bei der Befestigung von Prothesen und abnehmbaren Brücken Anwendung. Dabei ist die Patrize an einem gesunden Zahn oder an einem Implantat mit dem im Mund verbleibenden Gebiß verbunden. Die Matrize ist an dem zu befestigenden Implantat angeordnet. Bei einem bekannten Geschiebe (DE 44 19 690 C1) weist die Patrize ein Riegelauge und die Matrize ein in das Riegelauge greifendes und in Verriegelungsstellung bringbares Riegelteil auf. Das Riegelteil hat einen drehbaren Riegelachsenkörper mit einem in das Riegelauge seitlich einsetzbaren und durch Verdrehen in Verriegelungslage festlegbaren Lamellenausschnitt.

Im Bereich der zahntechnischen Geschiebe sind nicht nur verriegelbare, sondern auch verschraubbare und frikativ einstellbare Geschiebe bekannt. Bei den bekannten Geschieben besteht ein Nachteil darin, daß beispielsweise ein verschraubtes Geschiebe nicht unter Beibehaltung aller seiner in einer Prothese oder Brücke verarbeiteten Bestandteile in ein verriegelbares Geschiebe und/oder Friktionsgeschiebe umbaubar ist. Zur Beseitigung dieses Nachteils ist ein von der Firma Cendres et Metaux S.A., Bienne, Schweiz, mit der Bezeichnung "Mini-SG®-System" angebotenes Geschiebe-System
bekannt, bei dem nur eine Patrize benötigt wird. Je nach Einsatzfall sind an diese Patrize vier verschiedene Matrizen anbaubar. Das bekannte Geschiebe-System weist den Nachteil auf, daß beispielsweise eine verschraubte Brücke nicht in einen verriegelbaren Zahnersatz unter Beibehaltung der vorherigen Konstruktion umbaubar ist. Bei dem bekannten System ist es erforderlich, bei jeder Umbaumaßnahme eine komplett neue Sekundärkonstruktion (Prothese) anzufertigen. Diese Maßnahme ist für den jeweiligen Patienten mit sehr hohen Kosten verbunden. Darüber hinaus ist das bekannte System als Friktionsgeschiebe nicht stufenlos einstellbar.

Hier will die Erfindung Abhilfe schaffen. Der Erfindung liegt die Aufgabe zugrunde, ein zahntechnisches Geschiebe zu schaffen, das aus wenigen Bauteilen besteht und bei dem der Umbau von einem beispielsweise verschraubten zu einem verriegelbaren Geschiebe und/oder Friktionsgeschiebe unter Beibehaltung der bisherigen Prothetik zu ermöglichen. Gemäß der Erfindung wird diese Aufgabe dadurch gelöst, daß ohne Austausch der Patrize und/oder der Matrize wahlweise ein verschraubbares oder ein verriegelbares oder ein frikativ einstellbares Geschiebe herstellbar ist.

Mit der Erfindung ist ein zahntechnisches Geschiebe geschaffen, welches den Umbau von einem verschraubten in ein verriegelbares Geschiebe und/oder Friktionsgeschiebe unter Beibehaltung all seiner in der Prothese verarbeiteten Teile möglich ist. Hierdurch ist eine Reduzierung der Kosten für den Patienten erreicht.

In Weiterbildung der Erfindung ist die Matrize mittelliniensymmetrisch. Hierdurch ist die Möglichkeit geschaffen, die Matrize von zwei Seiten her zu benutzen. Es braucht folglich für eine rechts oder links angeordnete Brücke keine unterschiedliche Matrize bevorratet zu werden.

In Ausgestaltung der Erfindung ist in dem Einsatz eine Ausnehmung ausgebildet. In montiertem Zustand fluchtet diese Ausnehmung mit Bohrungen in den Seitenwänden der Matrize. Bei Verwendung eines Riegelbolzens oder eines Schraubbolzens ist so eine einfache Sicherung gegen Herausziehen des Einsatzes geschaffen. Bevorzugt ist in der Ausnehmung ein Loch hervorgerufen. Dieses Loch fluchtet in montiertem Zustand mit einer in dem Gleitstück vorgesehenen Ausnehmung an der Patrize. Somit ist bei Verwendung eines Riegelbolzens oder eines Schraubbolzens eine Sicherung gegen Herausziehen sowohl der Patrize als auch des Einsatzes geschaffen.

In vorteilhafter Ausgestaltung der Erfindung ist an dem Einsatz eine Rippe ausgebildet. Bevorzugt ist diese Rippe mit einer schief an Ebene versehen. Hierdurch ist die Möglichkeit des erfindungsgemäßen Geschiebes als Friktionsgeschiebe geschaffen, indem eine mit einem Konus versehene Schraube in die Matrize eingeschraubt wird.

Wahlweise ist das Geschiebe mit einem Riegelbolzen ausgestattet. In Ausgestaltung ist der Riegelbolzen teilweise von einem Knopf umgeben. Vorteilhaft ist der Knopf innen mit zwei Hinterschnitten versehen, die mit Schlitzen eines Kopfes korrespondieren. Im Gegensatz zu bekannten Riegelbolzen, bei denen der Knopf fliegend gelagert, also hin- und herschiebbar ist, ist durch diese Ausgestaltung eine gefangene Lagerung hervorgerufen. Der Knopf ist zudem unverlierbar auf dem Bolzen angeordnet.

Weitere Ausgestaltungen und Weiterbildungen der Erfindung sind in den übrigen Unteransprüchen angegeben. Ein Ausführungsbeispiel der Erfindung ist in der Zeichnung dargestellt und wird nachfolgend im einzelnen beschrieben. Es zeigen:
- Fig. 1: eine Explosionszeichnung eines zahntechnischen Geschiebes in vergrößerter Darstellung;
- Fig. 2: das in Figur 1 dargestellte zahntechnische Geschiebe mit einem Verriegelungsbolzen;
- Fig. 3: das in Figur 1 dargestellte zahntechnische Geschiebe als Friktionsgeschiebe;
- Fig. 4: einen Schnitt durch das in Figur 3 dargestellte Geschiebe entlang der Längsmittellinie in montiertem Zustand;

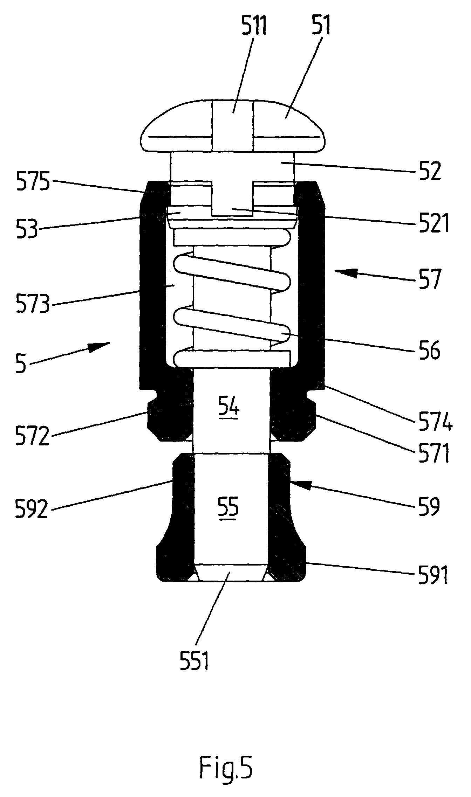

- Fig. 5: einen Schnitt durch einen Riegelbolzen;
- Fig. 6: die Darstellung eines zahntechnischen Geschiebes mit Riegelbolzen im Schnitt entlang der Längsmittellinie des Riegelbolzen und
- Fig. 7: die Darstellung eines zahntechnischen Geschiebes mit Schraubbolzen im Schnitt entlang der Längsmittellinie des Schraubbolzens.

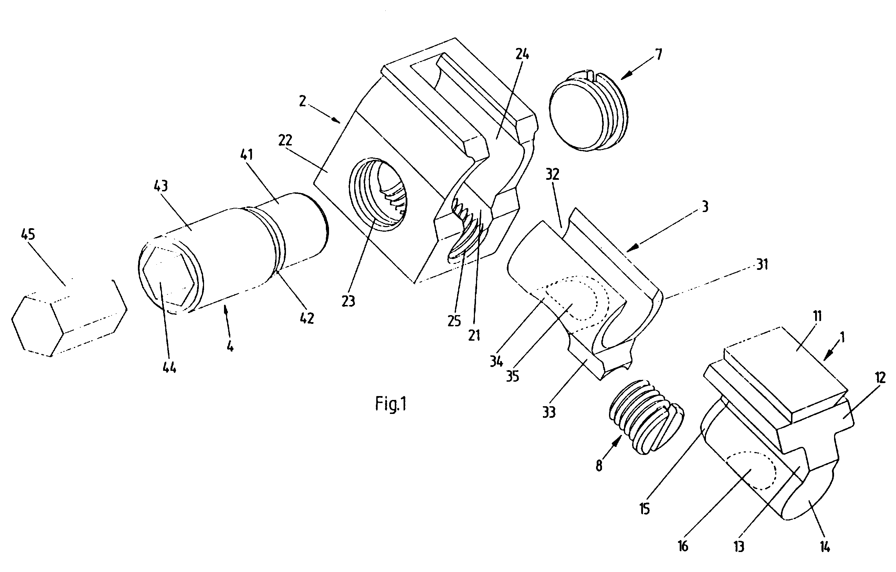

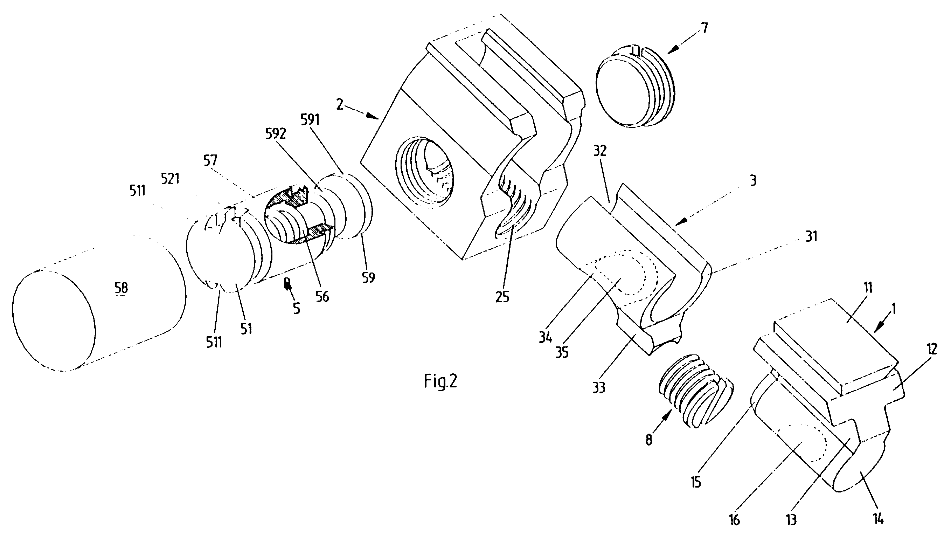

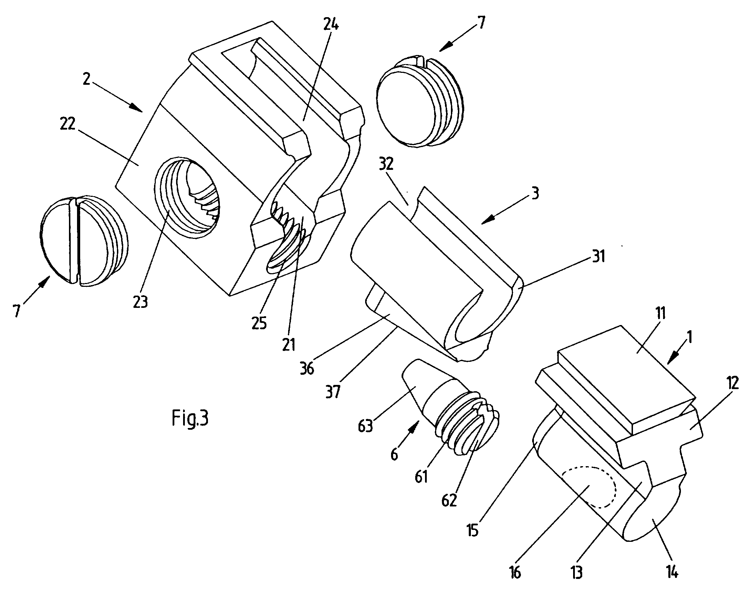

Das als Ausführungsbeispiel gewählte zahntechnische Geschiebe weist eine Patrize 1 und eine Matrize 2 auf. Die Matrize 2 ist an der Patrize 1 befestigbar. In montiertem Zustand ist zwischen Patrize 1 und Matrize 2 ein Einsatz 3 aus Metall angeordnet. Zur Befestigung eines bedingtabnehmbaren Zahnersatzes weist das zahntechnische Geschiebe einen Schraubbolzen 4 auf (Fig. 1); zum Aufbau einer verriegelbaren Konstruktion ist das Geschiebe mit einem Riegelbolzen 5 ausgestattet (Fig. 2); zur Herstellung eines Friktionsgeschiebes ist das Geschiebe mit einer Aktivierungsschraube 6 versehen (Fig. 3).

Die Patrize 1, die bei allen Anwendungsfällen gleich ist, weist an ihrem der Matrize 2 abgewandten Ende eine schwalbenschwanzförmige Ausbildung 11 auf. Die Ausbildung 11 dient der Befestigung der Patrize 1 an einem Restzahn oder einer nicht dargestellten Krone, die auf einen beschliffenen Zahnstumpf aufgesetzt ist. Im Anschluß an die Ausbildung 11 ist in der Patrize 1 eine Platte 12 ausgebildet, an die sich ein Steg 13 anschließt. Über den Steg 13 ist ein Gleitstück 14 mit der Platte 12 verbunden. Das Gleitstück 14 ist zylindrisch ausgebildet und weist einen Durchmesser auf, der größer ist als die Breite des Steges 13. An seinem einen Ende ist das Gleitstück 14 mit einer Fase 15 versehen, um das Einführen der Patrize 1 in die Matrize 2 zu vereinfachen. Auf der dem Steg 13 abgewandten Seite ist in dem Gleitstück 14 eine Ausnehmung 16 vorgesehen. Die Ausnehmung 16 ist als Teilzylinder ausgebildet, wobei der Öffnungswinkel größer als 180° ist.

Die Matrize 2, die ebenfalls bei allen Anwendungsfällen gleich ist, ist mittelliniensymmetrisch aufgebaut. Sie ist als ein eine Nut 21 aufweisendes Profilstück gestaltet. Die die Nut 21 mitbildenden Seitenwände 22 sind von koaxialen Bohrungen 23 durchsetzt. Die Bohrungen 23 sind als Gewindebohrungen ausgebildet. Die Bohrungen 23 dienen entweder der Aufnahme eines Schraubbolzens 4 oder eines Riegelbolzens 5 oder für den Fall, daß die jeweilige Bohrung im Anwendungsfall nicht benötigt wird - beispielsweise bei Verwendung als Friktionsgeschiebe -, zur Aufnahme von Verschlußschrauben 7. Die Verschlußschrauben 7 haben dann die Funktion eines Platzhalters für spätere Versionen, wenn sich die Zahnsituation des Patienten verändert und ein Umbau der Konstruktion erforderlich ist.

Auf der der Patrize 1 zugewandten Seite ist ein die Nut 21 verengender Schlitz 24 an der Matrize 2 ausgebildet. Die Nut 21 hat im Innenquerschnitt hohlzylindrische Form. Die Breite des Schlitzes 24 entspricht der Dicke des Steges 13 der Patrize 1. Bei vollständig von der Nut 21 aufgenommenem Gleitstück 14 fluchtet die Ausnehmung 16 in dem Gleitstück 14 mit den Bohrungen 23 in der Matrize 2. Parallel zur Längsmittellinie ist in dem dem Schlitz 24 abgewandten Bereich der Matrize 2 eine Gewindebohrung 25 angeordnet.

Der Einsatz 3 besteht aus einem das Gleitstück 14 der Patrize 1 umschließenden hohlzylindrischen Teil 31. Die Innenabmessungen des Teils 31 entsprechen den Außenabmessungen des Gleitstücks 14; die Außenabmessungen des Teils 31 entsprechen den Innenabmessungen der Nut 21 der Matrize 2. Auf seiner der Patrize 1 zugewandten Seite ist entlang der Längsmittellinie ein Schlitz 32 ausgebildet, dessen Breite im wesentlichen der Dicke des Steges 13 der Patrize 1 entspricht. In den Ausführungsbeispielen nach den Figuren 1 und 2 ist an dem Einsatz 3 auf seiner dem Schlitz 32 abgewandten Seite ein Ansatz 33 angeformt, der sich nur über einen Teilbereich der Länge des Einsatzes 3 erstreckt. Er ist auf seiner freien Seite mit einem Gewindeschnitt versehen. Im Anschluß an den Ansatz 33 ist in den Ausführungsbeispielen nach den Figuren 1 und 2 eine Ausnehmung 34 ausgebildet, die die Form eines Teilzylinders hat und deren Öffnungswinkel größer als 180° ist. Die Ausnehmung 34 erstreckt sich rechtwinklig zur Längsmittellinie des Einsatzes 3 und tritt durch die Wandung des hohlzylindrischen Teils 31, wodurch ein Loch 35 im Einsatz 3 hervorgerufen ist. Bei vollständig von der Matrize 2 aufgenommenen Einsatz 3 fluchtet die Ausnehmung 34 mit den Bohrungen 23 der Matrize 2. Bei vollständig aufgenommener Patrize 1 in dem Einsatz 3 fluchtet die Ausnehmung 16 mit der Ausnehmung 34 und dem Loch 35 in dem Einsatz 3. In eingesetztem Zustand des Einsatzes 3 in die Matrize 2 ist in den Ausführungsbeispielen nach den Figuren 1 und 2 eine Madenschraube 8 in die Gewindebohrung 25 eingeschraubt. Die Schraube 8 erstreckt sich maximal über die gesamte Länge des Ansatzes 33.

Im Ausführungsbeispiel nach Figur 3 ist auf der dem Schlitz 32 abgewandten Seite an dem Einsatz 3 eine Rippe 36 ausgebildet. Die Rippe 36 erstreckt sich im wesentlichen über die gesamte Länge des Einsatzes 3 entlang seiner Längsmittellinie. Die Rippe 36 ist auf ihrer dem Schlitz 32 abgewandten Seite mit einer schiefen Ebene 37 versehen. Dabei nimmt die Höhe der Rippe von der Einschubseite der Patrize 1 in den Einsatz 3 hinzu. Bei vollständig in der Matrize 2 auf genommenem Einsatz 3 wird die Aktivierungsschraube 6 in die Gewindebohrung 25 der Matrize 2 eingeschraubt.

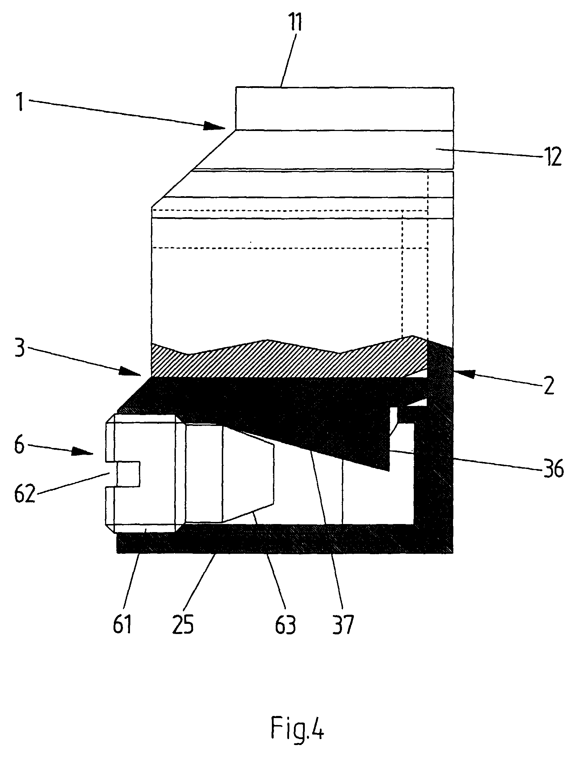

Die Aktivierungsschraube 6 weist an ihrem einen Ende ein Außengewinde 61 sowie einen Betätigungsschlitz 62 auf. An ihrem dem Gewinde 61 abgewandten Ende ist die Aktivierungsschraube 6 mit einem Konus 63 versehen. Beim Einschrauben der Schraube 6 in die Gewindebohrung 25 kommt der Konus 63 zur Anlage mit der schiefen Ebene 37 des Einsatzes 3 (Fig. 4). Bei weiterem Einschrauben wird vom Konus 63 eine Kraft auf die schiefe Ebene 37 übertragen, die auf das Gleitstück 14 der Patrize 1 übertragbar ist. Es ist dadurch ein frikativ einstellbares Geschiebe geschaffen.

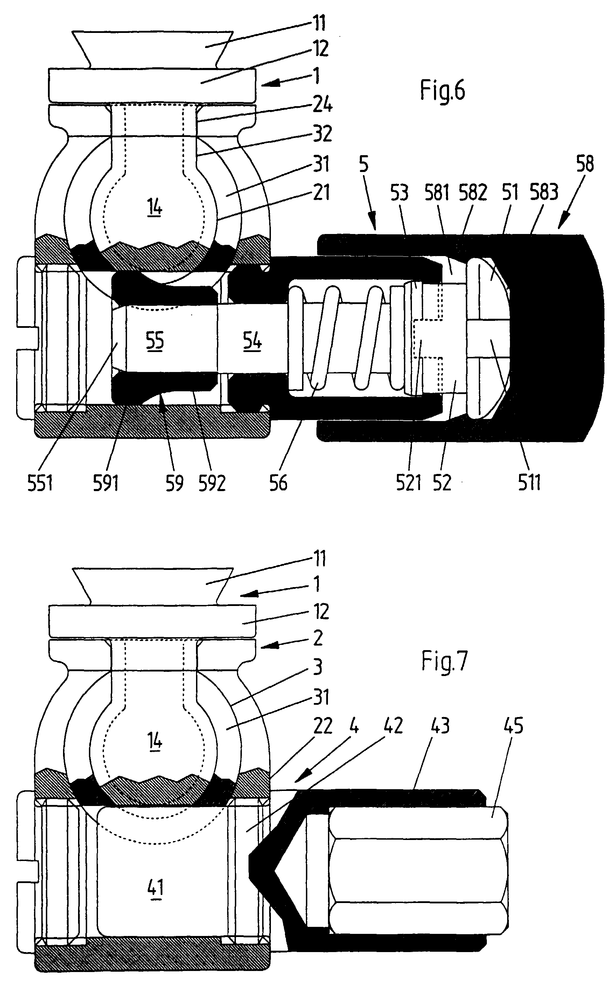

Der Schraubbolzen 4 ist zur Verwendung des Geschiebes in Verbindung mit einem bedingt abnehmbaren Zahnersatz vorgesehen. Er weist auf seiner der Matrize 2 zugewandten Seite einen Absatz 41 auf, dessen Durchmesser geringer ist als der der Bohrungen 23 in der Matrize 2. Im Anschluß an den Absatz 41 ist ein Gewinde 42 vorgesehen, das zum Einschrauben in das in der Bohrung 23 vorgesehene Gewinde dient. An das Gewinde 42 schließt sich ein Absatz 43 an, dessen Durchmesser größer ist als der der Bohrung 23. In eingeschraubtem Zustand des Schraubbolzens 4 kommt die der Matrize 2 zugewandte Seite des Absatzes 43 mit der Seitenwand 22 zur Anlage (Fig. 7). In dem Absatz 43 ist zur Anordnung des Zahnersatzes ein Innensechskant 44 ausgebildet. Der Innensechskant 44 ist mit einem Außensechskant 45 verschließbar, um die Ablagerung von Zahnstein oder dergleichen im Innensechskant 44 zu verhindern. In eingeschraubtem Zustand des Bolzens 4 in eine der Bohrungen 23 der Matrize 2 ragt der Absatz 41 rechtwinklig in die Gewindebohrung 25. In montiertem Zustand der Matrize 2 mit Einsatz 3 auf der Patrize 1 liegt damit der Absatz 41 mit seiner dem Einsatz 3/der Patrize 1 zugewandten Seite in der Ausnehmung 34/der Ausnehmung 16. Es ist somit eine Ausziehsicherung sowohl im Einsatz 3 als auch in der Patrize 1 geschaffen.

Der Riegelbolzen 5 weist auf seinem der Matrize 2 abgewandten Ende einen Kopf 51 auf. Der Kopf 51 ist im Ausführungsbeispiel mit zwei Schlitzen 511 versehen. Im Anschluß an den Kopf 51 ist ein Abschnitt 52 vorgesehen, der ebenfalls im Ausführungsbeispiel zwei Schlitze 521 aufweist. Der Abschnitt 52 endet in einem Absatz 53 mit vergrößertem Durchmesser, an den sich ein Zylinder 54 geringen Durchmessers anschließt. Der Zylinder 54 geht über in einen weiteren Zylinder 55 mit kleinerem Durchmesser, an dessen freien Ende eine Fase 551 ausgebildet ist. Um den Zylinder 54 ist eine Schraubenfeder 56 angeordnet, die mit ihrem einen Ende am Absatz 53 anliegt.

Im Bereich des Zylinders 54 ist ein Gehäuse 57 angeordnet. Das Gehäuse 57 weist an seinem der Matrize 2 zugewandten Ende ein Außengewinde 571 auf, mit dem der Bolzen 5 in die Gewinde der Bohrungen 23 in der Matrize 2 einschraubbar ist. Im Bereich des Außengewindes 571 ist das Gehäuse 57 mit einer Bohrung 572 versehen, deren Durchmesser im wesentlichen dem Durchmesser des Zylinders 54 entspricht. Der Zylinder 54 ist von der Bohrung 572 geführt. An die Bohrung 572 schließt sich eine Bohrung 573 größeren Durchmessers an. Hierdurch ist im Übergang der Bohrungen 572 zu 573 eine Anlagefläche 574 geschaffen, an der das dem Kopf 51 abgewandte Ende der Schraubenfeder 56 anliegt. An dem dem Gewinde 571 abgewandten Ende ist auf der Innenseite des Gehäuses 57 ein Hinterschnitt 575 ausgebildet. Der Hinterschnitt 575 faßt in montiertem Zustand des Bolzens 5 hinter den Absatz 53. Der Hinterschnitt 575 weist einen Innendurchmesser auf, der im wesentlichen gleich dem Außendurchmesser des Abschnitts 52 ist; er liegt an dem Abschnitt 52 an. Die Breite des Hinterschnitts 575 ist im wesentlichen gleich der Breite der Schlitze 521, so daß beim Zusammenbau des Bolzens nach dem Einführen in das Gehäuse 57 eine Drehung um wenige Grad ausreicht, um eine sichere Befestigung des Gehäuses 57 zu gewährleisten.

Der Kopf 51 sowie Teile des Gehäuses 57 sind in montiertem Zustand von einem Knopf 58 umgeben. Der Knopf 58 ist mit einer Bohrung 581 versehen, deren Durchmesser im wesentlichen gleich dem Außendurchmesser des Gehäuses 57 ist. Im Bereich des Kopfes 51 ist der Knopf 58 innen mit zwei Hinterschnitten 582 versehen, deren Breite im wesentlichen gleich der Breite der Schlitze 511 im Kopf 51 ist. Die Montage des Knopfes 58 auf den Kopf 51 erfolgt durch einfaches Aufschieben, wobei die Hinterschnitte 582 durch die Schlitze 511 geführt werden. Liegt der Kopf 51 in dem Knopf 58 ist durch einfaches Drehen des Knopfes auf dem Kopf eine sichere, unvertierbare Anordnung des Knopfes 58 gewährleistet. In diesem Zustand liet der Kopf 51 an einem Boden 583 des Knopfes 58 an (Fig. 6). Aufgrund der Hinterschnitte 582 und der Anlage des Kopfes 51 an dem Boden des Knopfes 58 ist dieser gefangen gelagert.

Auf dem Zylinder 55 ist eine Hülse 59 angeordnet, deren Innendurchmesser dem Durchmesser des Zylinders 55 entspricht. Die Länge der Hülse 59 ist im Ausführungsbeispiel gleich der Länge des Zylinders 55 einschließlich der Fase 551. Die Hülse 59 liegt mit ihrem dem Kopf 51 zugewandten Ende an der zwischen den Zylindern 54 und 55 ausgebildeten Anlagefläche an. Auf ihrer Außenseite weist die Hülse 59 eine parabelartige Form auf (Fig. 6). Es ist jedoch auch möglich, die Hülse 59 mit einem Absatz auszubilden, wie er beispielsweise in Figur 2 dargestellt ist. In beiden Ausführungsformen ist ein durchmessergrößerer Bereich 591 sowie ein durchmesserkleinerer Bereich 592 an der Außenseite der Hülse 59 gebildet.

In montiertem Zustand des Riegelbolzens 5 (Fig. 6) ist dieser mit dem Gewinde 571 in die mit einem Gewinde versehene Bohrung 23 geschraubt. Die Kraft der Feder 56 drückt in diesem Zustand den Absatz 53 gegen den Hinterschnitt 574. Dadurch ist der Zylinder 55 in eine Position gebracht, in der der durchmessergrößere Bereich 591 der auf dem Zylinder 55 angeordneten Hülse 59 in die Ausnehmungen 34 und 16 ragt. Die Patrize 1 sowie der Einsatz 3 sind dadurch gegen Herausziehen gesichert. Beim Ausüben eines Drucks auf den Knopf 58 wird der Kopf 51 mit dem Knopf 58 entgegen der Kraft der Feder 56 in Richtung der Matrize 2 soweit gedrückt, bis das dem Kopf 51 zugewandte Ende des Gehäuses 57 mit dem Kopf zur Anlage kommt. In dieser Position ist die Hülse 59 mit ihrem durchmessergrößeren Bereich 591 aus dem Bereich der Ausnehmungen 34 und 16 herausgedrückt, wodurch die Patrize 1 zum Herausziehen freigegeben ist. Nach dem Herausziehen der Patrize 1 und Loslassen des Knopfs 58 fährt der Riegelbolzen 5 in seine Ausgangsposition zurück.

Für Patienten, die beispielsweise unter Gicht leiden, kann der Riegel weggelassen werden, um diesen Patienten das Entriegeln des Bolzens zu ersparen. In diesem Fall kommen Kunststoffeinsätze in der Matrize 2 zum Einsatz, bei denen die Friktion dann mit Madenschrauben einstellbar ist.

Durch die erfindungsgemäße Ausgestaltung der Matrize ist es je nach Einsatzgebiet möglich, beide Seiten der Matrize für eine verschraubbare Brücke zu benutzen und durch einfachen Austausch eines Bauelementes zu einem verriegelten Geschiebe umzubauen. Hierdurch ist eine hohe Kosteneinsparung erzielt, da ausschließlich der zum Kieferkamm des Patienten hin gelegene Anteil vom Zahntechniker durch Prothesenkunststoff ergänzt werden muß. Auch eine Umarbeitung zu einem frikativ einstellbaren Geschiebe unter Beibehaltung der alten Bestandteile der Prothese ist durch einfachen Austausch der Bauelemente möglich.

## Patentansprüche

1. Zahntechnisches Geschiebe mit einer an einem Restzahn oder einem Implantat befestigten Patrize, die ein Gleitstück aufweist, und mit einer an einem herausnehmbaren Zahnersatz angeordneten Matrize, die an der Patrize befestigbar ist, wobei zwischen Patrize und Matrize ein Einsatz angeordnet ist, dadurch gekennzeichnet, daß ohne Austausch der Patrize (1) und/oder der Matrize (2) wahlweise ein verschraubbares oder ein verriegelbares oder ein frikativ einstellbares Geschiebe herstellbar ist.

2. Zahntechnisches Geschiebe nach Anspruch 1, dadurch gekennzeichnet, daß in dem Gleitstück (14) eine Ausnehmung (16) vorgesehen ist.

3. Zahntechnisches Geschiebe nach Anspruch 1 oder 2, dadurch gekennzeichnet, daß die Matrize (2) mittelliniensymmetrisch ist.

4. Zahntechnisches Geschiebe nach einem der Ansprüche 1 bis 3, dadurch gekennzeichnet, daß die Matrize (2) als ein eine Nut (21) aufweisendes Profilstück ausgebildet ist.

5. Zahntechnisches Geschiebe nach einem der Ansprüche 1 bis 4, dadurch gekennzeichnet, daß die Seitenwände (22) der Matrize (2) Bohrungen (23) aufweisen.

6. Zahntechnisches Geschiebe nach einem der Ansprüche 1 bis 5, dadurch gekennzeichnet, daß in der Matrize (2) parallel zur Längsmittellinie eine Gewindebohrung (25) angeordnet ist.

7. Zahntechnisches Geschiebe nach einem der Ansprüche 1 bis 6, dadurch gekennzeichnet, daß der Einsatz (3) aus Metall besteht.

8. Zahntechnisches Geschiebe nach einem der Ansprüche 1 bis 7, dadurch gekennzeichnet, daß der Einsatz (3) aus einem hohlzylindrischen Teil (31) besteht, in dem entlang seiner Längsmittellinie ein Schlitz (32) ausgebildet ist.

9. Zahntechnisches Geschiebe nach einem der Ansprüche 1 bis 8, dadurch gekennzeichnet, daß an dem Einsatz (3) ein Ansatz (33) angeformt ist.

10. Zahntechnisches Geschiebe nach Anspruch 9, dadurch gekennzeichnet, daß sich der Ansatz (33) nur über einen Teilbereich des Einsatzes (3) erstreckt.

11. Zahntechnisches Geschiebe nach einem der Ansprüche 1 bis 10, dadurch gekennzeichnet, daß in dem Einsatz (3) eine Ausnehmung (34) ausgebildet ist.

12. Zahntechnisches Geschiebe nach den Ansprüchen 8 und 11, dadurch gekennzeichnet, daß die Ausnehmung (34) unter Bildung eines Lochs (35) durch die Wandung des hohlzylindrischen Teils (31) tritt.

13. Zahntechnisches Geschiebe nach einem der Ansprüche 1 bis 8, dadurch gekennzeichnet, daß an dem Einsatz (3) eine Rippe (36) ausgebildet ist.

14. Zahntechnisches Geschiebe nach Anspruch 13, dadurch gekennzeichnet, daß die Rippe (36) mit einer schiefen Ebene (37) versehen ist.

15. Zahntechnisches Geschiebe nach einem der Ansprüche 1 bis 14, dadurch gekennzeichnet, daß das Geschiebe mit einem Riegelbolzen (5) ausgestattet ist.

16. Zahntechnisches Geschiebe nach Anspruch 15, dadurch gekennzeichnet, daß der Riegelbolzen (5) mit einem Gehäuse (57) versehen ist.

17. Zahntechnisches Geschiebe nach Anspruch 16, dadurch gekennzeichnet, daß auf der Innenseite des Gehäuses (57) ein Hinterschnitt (575) ausgebildet ist, der mit Schlitzen (521) eines Abschnittes (52) korrespondiert.

18. Zahntechnisches Geschiebe nach einem der Ansprüche 15 bis 17, dadurch gekennzeichnet, daß der Riegelbolzen (5) teilweise von einem Knopf (58) umgeben ist.

19. Zahntechnisches Geschiebe nach Anspruch 18, dadurch gekennzeichnet, daß der Knopf (58) innen mit zwei Hinterschnitten (582) versehen ist, die mit Schlitzen (511) eines Kopfes (51) korrespondieren.
